# EUROPÄISCHE PATENTSCHRIFT

(11) **EP 2 206 662 B1**
(45) Veröffentlichungstag und Bekanntmachung des Hinweises auf die Patenterteilung: **09.05.2012**
(21) Anmeldenummer: 10150221.9
(22) Anmeldetag: 07.01.2010
(51) Int. Cl.: B65G 1/08, G07F 11/32

(54) **Ausgabevorrichtung für einen Schrägfachbodenspeicher**
Dispenser for a storage unit with slanted shelving
Dispositif de sortie pour une unité de stockage d'étagères inclinés

(30) Priorität: 07.01.2009 DE 202009000153 U
(43) Veröffentlichungstag der Anmeldung: 14.07.2010
(73) Patentinhaber: Gebr. Willach GmbH, 53809 Ruppichteroth (DE)
(72) Erfinder: Willach, Jens, 53783 Eitorf (DE); Schmitt, Werner, 53809 Ruppichteroth (DE); Schmitz, Stefan, 53819 Neunkirchen-Seelscheid (DE)
(74) Vertreter: von Kreisler Selting Werner

(56) Entgegenhaltungen:
- EP-A1- 1 820 166
- WO-A1-2008/010722
- US-A- 6 098 841

## Beschreibung

Die Erfindung betrifft eine Ausgabevorrichtung zur Ausgabe von Gegenständen gemäß dem Oberbegriff des Anspruchs 1.

Schrägfachbodenspeicher enthalten Gegenstände in einer Reihe in einem schrägen Kanal. Die Gegenstände ruhen auf dem Kanalboden und sie gleiten in dem Kanal in Richtung auf das untere Kanalende, welches das Ausgabeende bildet. An dem Ausgabeende befindet sich eine gesteuerte Ausgabevorrichtung, die den jeweils untersten Gegenstand der Reihe einzeln ausgeben kann, wobei die verbleibende Reihe von Gegenständen aufgrund der Schwerkraft in dem Kanal nach unten nachrutscht.

In US 6,098,841 A ist eine Ausgabevorrichtung beschrieben, bei der ein gemeinsamer Schieber zwei Schwenkorgane verschiebt, die im Aktivierungszustand über den Kanalboden hinausragen, wobei die Betätigung derart erfolgt, dass das eine Schwenkorgan sich in der Haltestellung befindet, während das andere Schwenkorgan abgetaucht ist.

In WO 2008/010722 A1 ist eine Ausgabevorrichtung gemäß dem Oberbegriff des Anspruchs 1 beschrieben, die ein einziges Schwenkorgan mit einem Anschlag aufweist. Das Schwenkorgan ist ein zweiarmiger Hebel, dessen Schwenkachse sich unterhalb der Ebene des Kanalbodens befindet. Der eine Hebelarm trägt den Anschlag und der andere Hebelarm bildet ebenfalls ein Anschlagelement, an dem der nachfolgende Gegenstand, der sich auf dem Kanalboden befindet, anstößt.

Der Erfindung liegt die Aufgabe zugrunde, eine Ausgabevorrichtung für Schrägfachbodenspeicher zu schaffen, die kleinformatig ausgeführt werden kann und eine hohe Funktionssicherheit hat.

Die erfindungsgemäße Ausgabevorrichtung ist durch den Patentanspruch 1 definiert.

Dadurch, dass der Betätiger in Längsrichtung des Kanals ausgerichtet ist und eine ebenfalls in Längsrichtung des Kanals verlaufende Verschiebebewegung ausführt, erfolgt eine raumsparende Anordnung. Die lineare Verschiebebewegung des Betätigers erfolgt in Längsrichtung des Kanals und wird in eine Querbewegung des Anschlags umgesetzt. Die Längsbewegung des Betätigers ist aus baulichen Gründen besonders vorteilhaft. Dadurch wird es ermöglicht, zahlreiche Kanäle in einem Schrägfachbodenspeicher in kompakter Anordnung unterzubringen, wobei die Kanäle auch übereinander angeordnet sein können und ein geringer vertikaler Abstand eingehalten werden kann. Dies liegt daran, dass die Ausgabevorrichtung sich mit geringer vertikaler Erstreckung unter den Kanal schmiegt. Erfindungsgemäß ist das Schwenkorgan relativ zu dem Betätiger durch eine selbsthemmende Kurvenbahnführung geführt. Das Wort "selbsthemmend" hat in diesem Zusammenhang die gleiche Bedeutung wie "rückwirkungsfrei". Durch keine irgendwie geartete Bewegung des Schwenkorgans bzw. des Anschlags kann der Betätiger bewegt werden. Der Antrieb des Betätigers erfolgt ausschließlich durch die hierfür vorgesehene Bewegungsvorrichtung, beispielsweise einem elektrisch betriebenen Aktuator oder einen anderweitigen Betätiger. Dadurch wird die Funktionssicherheit erhöht.

Der Betätiger zum Bewegen des Anschlages kann von einem elektromagnetischen Aktuator angetrieben sein, der unter dem Kanalboden angeordnet ist. Alternativ kann der Betätiger von einer externen Vorrichtung betätigt werden, beispielsweise von einem Manipulator, der vor dem Schrägfachbodenspeicher bewegbar ist und imstande ist, aus einem Kanal einen Gegenstand anzufordern. Dieser Manipulator kann einen Finger aufweisen, der den Betätiger der Ausgabevorrichtung des jeweiligen Kanals verschiebt und dadurch die Warenausgabe bewirkt. Hierbei ist nicht für jeden Kanal ein eigener Aktuator erforderlich.

Gemäß einer bevorzugten Ausgestaltung der Erfindung ist der Anschlag an einem in Längsrichtung des Kanals verlaufenden Schwenkorgan vorgesehen, das an einem Ende durch ein Gelenk mit dem Kanalboden verbunden ist. Das Schwenkorgan ist Bestandteil des Kanalbodens und es kann durch Längsbewegung des Betätigers in eine Schwenkbewegung um die Gelenkachse versetzt werden, wobei ein von dem Schwenkorgan abstehender Anschlag unter die Ebene des Kanalbodens abgesenkt wird. Die Umwandlung der linearen Längsbewegung des Betätigers in eine Schwenkbewegung des Schwenkorgans erfolgt durch einen Bewegungswandler, der jedoch relativ einfach ausgeführt werden kann, nämlich als Kurvenbahn- oder Kulissenführung.

Gemäß einer bevorzugten Weiterbildung der Erfindung ist vorgesehen, dass das Schwenkorgan einen Ansatz aufweist, der bei abgesenktem Anschlag über den Kanalboden hinaus vorsteht und einen darauf aufliegenden Gegenstand von dem Kanalboden anhebt. Dieser Ansatz führt eine zu dem Anschlag gegenläufige Bewegung durch. Wenn der Anschlag abgesenkt ist, ist der Ansatz angehoben. Hierdurch wird ein auf dem Kanalboden liegender Gegenstand angehoben, um anschließend leichter zu gleiten. Andererseits besteht auch die Möglichkeit des Blockierens eines nachfolgenden Gegenstandes während der Ausgabe des vorhergehenden Gegenstandes.

Die erfindungsgemäße Ausgabevorrichtung kann in einem Schrägfachbodenspeicher benutzt werden, der zahlreiche Kanäle enthält, die die Gegenstände auf Förderer ausgeben. Ein solcher Schrägfachbodenspeicher wird von einem Lagerverwaltungsrechner aus gesteuert. Die Steuerung der Ausgabevorrichtungen erfolgt jeweils auf Anforderung eines bestimmten Gegenstandes, der sich in dem betreffenden Kanal befindet.

Schrägfachbodenspeicher eignen sich besonders für Apothekenlager, bei denen die Gegenstände Packungen darstellen und bei denen jeweils mehrere gleiche Packungen vorrätig gehalten werden müssen.

Im Folgenden wird unter Bezugnahme auf die Zeichnungen ein Ausführungsbeispiel der Erfindung näher erläutert.

Es zeigen:
- Fig. 1: eine perspektivische Darstellung des Ausgabeendes eines Kanales eines Schrägfachbodenspeichers,
- Fig. 2: die Ausgabevorrichtung im Ruhezustand mit gelagerten Gegenständen,
- Fig. 3: die Ausgabevorrichtung während der Ausgabe eines Gegenstandes,
- Fig. 4: eine Ansicht schräg von unten in die Ausgabevorrichtung bei geöffnetem Gehäuse und
- Fign. 5 - 8: Darstellungen der Abfolge einzelner Schritte beim Ausgeben eines Gegenstandes.

In den Zeichnungen ist das Ausgabeende eines Kanals 10 eines Schrägfachbodenspeichers dargestellt. Der Kanal 10 weist einen Kanalboden 11 auf sowie Seitenwände 12. In den Zeichnungen ist aus Gründen der Übersichtlichkeit nur eine der beiden Seitenwände 12 dargestellt. Der Kanalboden 11 verläuft von einem (nicht dargestellten) oberen Ende schräg nach unten bis zu einem Ausgabeende 13, welches das untere Kanalende bildet. Die Neigung des Kanalbodens 11 ist so groß, dass Gegenstände G unter Schwerkraftwirkung auf dem Kanalboden 11 zum Ausgabeende 13 gleiten können.

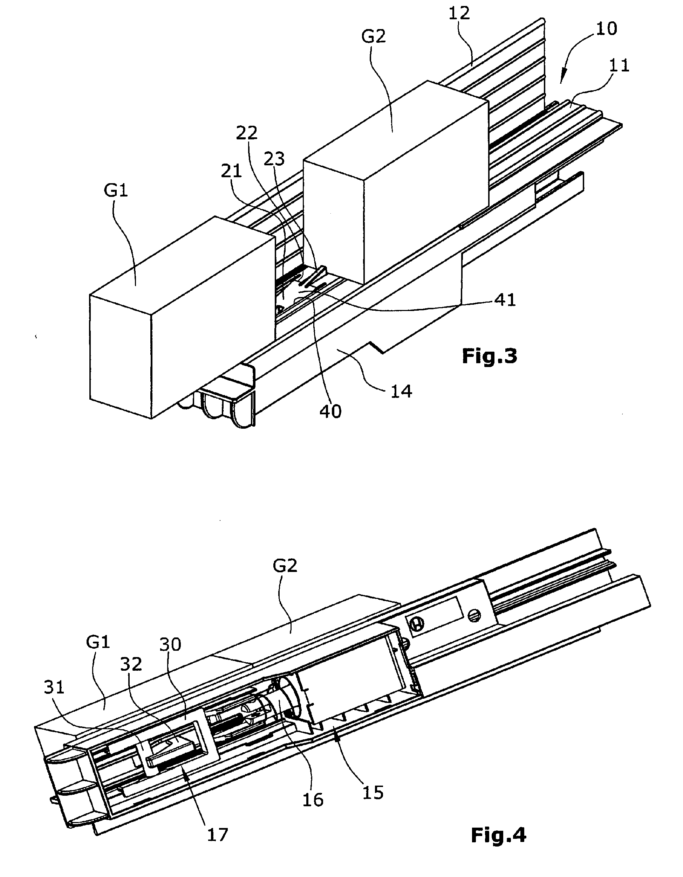

Am Ausgabeende 13 ist ein Gehäuse 14 unter dem Kanalboden 11 montiert, in welchem sich ein Aktuator 15 mit Verschiebestab 16 und ein Bewegungsumsetzer 17 befinden (Fig. 4).

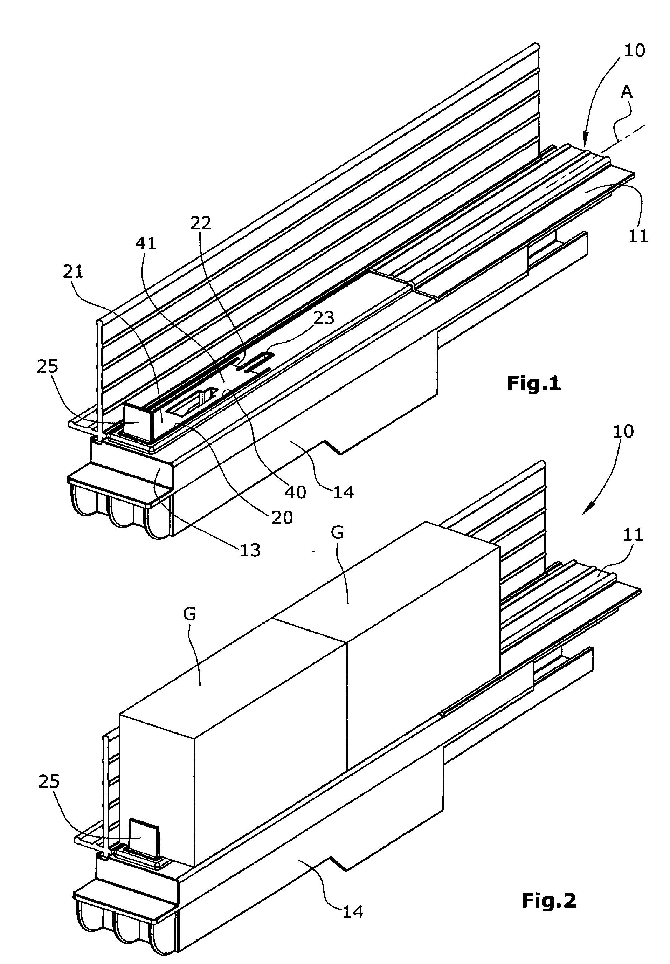

Gemäß Figur 1 ist der Kanalboden 11 am Ausgabeende mit einer länglichen Aussparung 20 versehen, in der sich ein Schwenkorgan 21 befindet. Das Schwenkorgan 21 ist eine Zunge, die die Aussparung 20 im wesentlichen ausfüllt. Diese Zunge ist mit einem Gelenk 22 mit dem Kanalboden 11 verbunden. Die Achse des Gelenks 22 läuft quer zur Längsachse A des Kanalbodens 11. Jenseits des Gelenks 22 weist das Schwenkorgan 21 einen Ansatz 23 auf. Das Gelenk 22 ist hier als Filmscharnier ausgebildet. Das Schwenkorgan 21 ist einstückig mit einem Abschnitt des Kanalbodens 11 ausgebildet. Das Gelenk 22 befindet sich in der Ebene des Kanalbodens. Es verbindet den Kanalboden mit dem Schwenkorgan. In dem Kanalboden 11 befindet sich eine Öffnung 40, in die der Schenkel 41 des Schwenkorgans 21 ausfüllend hineinragt, wenn sich der Anschlag 25 im angehobenen Zustand befindet.

An dem unteren Ende des Schwenkorgans 21 befindet sich ein rechtwinklig von dem Schwenkorgan 21 abstehender Anschlag 25 zum Anhalten des untersten Gegenstandes G. Durch Herabschwenken des Schwenkorgans 21 um die Achse des Gelenks 22 wird der Anschlag 25 unter die Ebene des Kanalbodens 11 abgesenkt.

Figur 2 zeigt zwei Gegenstände G, die auf dem Kanalboden aufliegen. Der vordere Gegenstand G stößt gegen den Anschlag 25, während der zurückliegende Gegenstand G sich an dem vorderen Gegenstand abstützt.

Figur 3 zeigt das Absenken des Anschlags 25 durch Verschwenken des Schwenkorgans 21 zum Ausgeben des vorderen Gegenstandes G1. Der Ansatz 23 des Schwenkorgans 21 hat die Funktion, dass er den vorderen Gegenstand G1 von dem Kanalboden 11 abhebt, damit dieser besser gleiten kann. Eine weitere Funktion des Ansatzes 23 ist das Zurückhalten des nachfolgenden Gegenstandes G2 während der Ausgabe des vorderen Gegenstandes G1, wie in Figur 3 dargestellt.

Figur 4 zeigt einen Blick in das Innere des Gehäuses 14 in welchem sich der Aktuator 15 befindet. Der Aktuator 15 ist ein Elektromagnet, der den Betätiger 30 linear verschiebt. Der Verschiebestab 16 ist in dem Aktuator 15 linear geführt. Seine Längsachse verläuft parallel zur Längsachse A des Kanalbodens.

Das Ende des Verschiebestabes 16 des Aktuators 15 wirkt auf einen gabelförmigen Betätiger 30, der in dem Gehäuse 14 linear verschiebbar geführt ist. Der Betätiger 30 hat einen Querstab 31, welcher von einer Kurvenbahnführung 32 des Schwenkorgans 21 von zwei entgegengesetzten Seiten umgriffen wird. Dadurch, dass der Betätiger 30 in Längsrichtung des Kanalbodens verschoben wird, wird über den Bewegungsumsetzer 17 eine Schwenkbewegung des Schwenkorgans um die Achse des Gelenks 22 veranlasst.

Bei dem dargestellten Ausführungsbeispiel befindet sich die Kurvenbahnführung 32 an dem Schwenkorgan 21, während der Stab 31 mit dem Betätiger 30 verbunden ist. Eine Alternative Lösung sieht vor, dass die Kurvenbahnführung mit dem linear bewegbaren Betätiger 30 verbunden ist, während der damit zusammenwirkende Stab 31 mit dem Schwenkorgan verbunden ist.

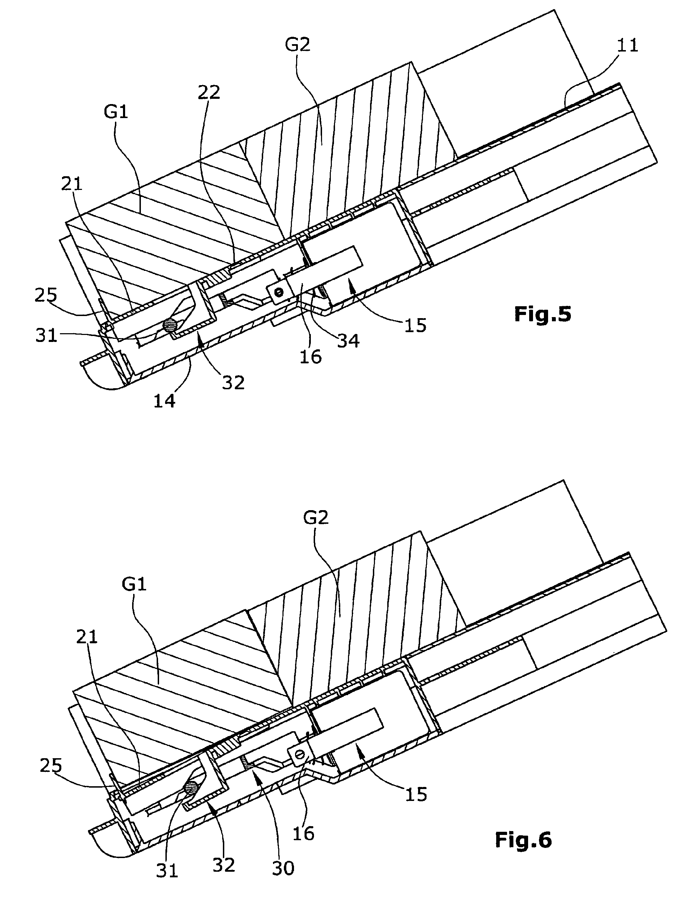

Figur 5 zeigt die Ausgabevorrichtung in der Warteposition, in der der vorderste Gegenstand G1 gegen den Anschlag 25 anliegt. Der Betätiger 30 wird durch die schraubenförmige Feder 34 von dem Aktuator 15 fortgedrückt, welche den Verschiebestab 16 koaxial umgibt. Der Stab 31 befindet sich in seiner vorderen Endstellung. Die Kurvenbahnführung 32 enthält eine Kurvenbahn 35 zum Führen des Stabes 31. Die Kurvenbahn 35 ist durch zwei parallele Kanten begrenzt, so dass der Stab 31 nicht abheben kann. Die Kurvenbahn bewirkt daher eine Zwangsführung des Stabes 31. Die Kurvenbahn weist einen schrägen Abschnitt auf.

Figur 6 zeigt die Situation zu Beginn eines Ausgabevorgangs. Der Aktuator zieht den Betätiger 30 an. Dadurch wird der Betätiger 30 mit dem Stab 31 zum Aktuator 15 hingezogen. Die Kurvenbahn 35 bewirkt, dass das Schwenkorgan 21 um das Gelenk 22 herum verschwenkt wird.

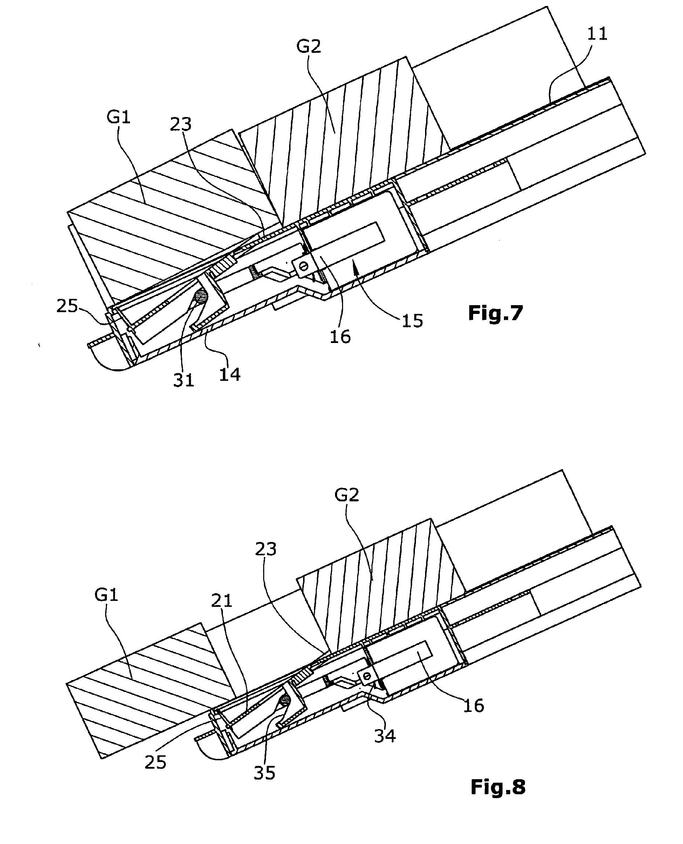

Figur 7 zeigt die Freigabesituation in der der Anschlag 25 unter die Ebene des Kanalbodens abgesenkt ist. Man erkennt auch, dass der Ansatz 23 den vorderen Gegenstand G1 leicht kippt, um dessen Ausgabe zu erleichtern.

In Figur 8 ist dargestellt, wie der vordere Gegenstand G1 den Kanal verlässt, während der nachfolgende Gegenstand G2 von dem im angehobenen Zustand befindlichen Ansatz 23 gestoppt wird. Anschließend wird die Erregung des Aktuators 15 beendet, so dass die Feder 34 den Betätiger 30 wieder vorschiebt und das Schwenkorgan 21 mit dem Anschlag 25 in den angehobenen Zustand zurückkehrt.

Die Kurvenbahn 35 ist selbsthemmend. Dadurch wird verhindert, dass durch Herabdrücken des Schwenkorgans 21 der Anschlag 25 abgesenkt werden kann. Das Absenken des Anschlags erfolgt ausschließlich durch Betätigung des Aktuators 15. Dadurch findet ein prozesssicheres Vereinzeln statt und eine unbeabsichtigte Ausgabe von Gegenständen wird verhindert.

## Patentansprüche

1. Ausgabevorrichtung zur Ausgabe von Gegenständen aus einem Schrägfachbodenspeicher, der einen zu einem Ausgabeende (13) abfallenden Kanal (10) bildet, wobei die Ausgabevorrichtung derart betätigbar ist, dass sie die Gegenstände einzeln aus dem Kanal (10) entlässt,
wobei der Kanalboden (11) ein um ein Gelenk (22) nach unten abschwenkbares Schwenkorgan (21) mit einem Anschlag (25) aufweist, wobei das Schwenkorgan (21) von einem in Längsrichtung des Kanals (10) linear bewegbaren Betätiger (30) angetrieben ist,
**dadurch gekennzeichnet,**
**dass** das Schwenkorgan (21) relativ zu dem Betätiger (30) durch eine selbsthemmende Kurvenbahnführung (32) geführt ist.

2. Ausgabevorrichtung nach Anspruch 1, **dadurch gekennzeichnet, dass** das Schwenkorgan (21) einen Ansatz (23) aufweist, der bei abgesenktem Anschlag (25) über den Kanalboden (11) vorsteht und einen darauf liegenden Gegenstand (G) von dem Kanalboden abhebt sowie einen nachfolgenden Gegenstand stoppt.

3. Ausgabevorrichtung nach Anspruch 1 oder 2, **dadurch gekennzeichnet, dass** der Betätiger (30) von einem elektromagnetischen Aktuator (15) angetrieben ist, der unter dem Kanalboden (11) angeordnet ist und eine Feder (34) enthält, die den Betätiger (30) von dem Aktuator (15) fortdrückt, wobei die Feder einen Verschiebestab (16) des Aktuators (15) umgibt.

## Claims

1. A dispensing device for dispensing objects from an inclined shelving bottom magazine forming a channel (10) sloped towards a dispensing end (13), said dispensing device being operable such that it releases the objects from the channel (10) individually,
wherein the channel bottom (11) has pivoting element (21) pivotable downward about a hinge (22) and having an abutment (25), the pivoting element (21) being driven by an actuating device (30) linearly movable in the longitudinal direction of the channel (10),
**characterized in that**
the pivoting element (21) is guided by a self-locking cam track guide (32) with respect to the actuating device (30).

2. The dispensing device of claim 1, **characterized in that** the pivoting element (21) comprises a projection (23) which, with the abutment (25) lowered, projects beyond the channel bottom (11) and lifts an object (G) resting thereon from the channel bottom and stops a following object.

3. The dispensing device of claim 1 or 2, **characterized in that** the actuating device (30) is driven by an electromagnetic actuator (15) arranged beneath the channel bottom (11) and comprises a spring (34) urging the actuating device (30) away from the actuator (15), the spring surrounding a pushrod (16) of the actuator (15).

## Revendications

1. Dispositif d'éjection destiné à éjecter des objets d'un magasin à fonds de compartiments inclinés qui forme un canal (10) descendant vers une extrémité d'éjection (13), le dispositif d'éjection pouvant être actionné de manière à libérer les objets du canal (10) un à un,
dans lequel le fond de canal (11) présente un organe pivotant (21) pouvant pivoter vers le bas autour d'une articulation (22) et muni d'une butée (25), l'organe pivotant (21) étant entraîné par un effecteur (30) qui se meut en mouvement linéaire dans la direction longitudinale du canal (10),
**caractérisé en ce que**
l'organe pivotant (21) est guidé relativement à l'effecteur (30) par un guidage à chemin curviligne autobloquant (32).

2. Dispositif d'éjection selon la revendication 1, **caractérisé en ce que** l'organe pivotant (21) présente un appendice (23) qui, lorsque la butée (25) est abaissée, fait saillie au-dessus du fond du canal (11) et soulève du fond du canal un objet (G) qui y repose, en même temps qu'il arrête l'objet suivant.

3. Dispositif d'éjection selon la revendication 1 ou 2, **caractérisé en ce que** l'effecteur (30) est entraîné par un actionneur électromagnétique (15) qui est disposé sous le fond du canal (11) et qui comprend un ressort (34) qui éloigne l'effecteur (30) de l'actionneur (15), le ressort entourant une tige mobile (16) de l'actionneur (15).
